(19) Europäisches Patentamt / European Patent Office / Office européen des brevets

(11) **EP 4 069 558 B1**

(12) **EUROPÄISCHE PATENTSCHRIFT**

(45) Veröffentlichungstag und Bekanntmachung des Hinweises auf die Patenterteilung:
**29.11.2023 Patentblatt 2023/48**

(21) Anmeldenummer: **20817277.5**

(22) Anmeldetag: **01.12.2020**

(51) Internationale Patentklassifikation (IPC):
**B60T 8/32** (2006.01)     **B60T 8/17** (2006.01)
**B60T 8/34** (2006.01)

(52) Gemeinsame Patentklassifikation (CPC):
**B60T 8/321; B60T 8/1708; B60T 8/1766; B60T 8/346**

(86) Internationale Anmeldenummer:
**PCT/EP2020/084046**

(87) Internationale Veröffentlichungsnummer:
**WO 2021/110642 (10.06.2021 Gazette 2021/23)**

(54) **VERFAHREN ZUR VERZÖGERUNGSREGELUNG EINES FAHRZEUGES SOWIE BREMSSYSTEM HIERFÜR**

DECELERATING CONTROL METHOD FOR A VEHICLE, AND BRAKE SYSTEM

MÉTHODE DE COMMANDE DE DÉCÉLÉRATION D'UN VÉHICULE, ET SYSTÈME DE FREIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.12.2019 DE 102019133373**

(43) Veröffentlichungstag der Anmeldung:
**12.10.2022 Patentblatt 2022/41**

(73) Patentinhaber: **ZF CV Systems Global GmbH 3006 Bern (CH)**

(72) Erfinder:
• **DIECKMANN, Thomas**
  **30982 Pattensen (DE)**
• **SCHWAGMEYER, Florian**
  **31311 Uetze - Dollbergen (DE)**

(74) Vertreter: **Ohlendorf, Henrike
ZF CV Systems Hannover GmbH
Am Lindener Hafen 21
30453 Hannover (DE)**

(56) Entgegenhaltungen:
**DE-A1- 4 340 467     DE-A1-102017 005 816**

**Beschreibung**

Die Erfindung betrifft ein Verfahren zur Verzögerungsregelung eines Fahrzeugs, insbesondere eines Nutzfahrzeugs, mit einer Vorderachse und einer Hinterachse, bei dem bei einer elektronischen Verzögerungsanforderung unterhalb eines vorgegebenen Verzögerungsschwellenwerts nur ein Bremskreis für die Vorderachse oder die Hinterachse aktiviert wird, das heißt, nur an der ausgewählten Achse ein Bremsdruck generiert und das Fahrzeug nur über diese Achse abgebremst wird. Die Erfindung betrifft weiterhin ein entsprechendes Bremssystem und ein Fahrzeug mit dem entsprechenden Bremssystem.

DE 43 40 467 A1 zeigt eine hydraulische Fahrzeugbremsanlage mit einer per Pedal in Betrieb setzbaren zweikreisigen Notbremsdruckquelle, mit aus der Notbremsdruckquelle versorgbaren Radbremsen, mit von der Notbremsdruckquelle zu den Radbremsen verlaufenden zweikreisig verlegten Notbremshauptleitungen und mit einer mittels des Pedals elektrisch steuerbaren Fremdkraftbremseinrichtung.

DE 10 2017 005816 A1 zeigt ein Verfahren zur Bestimmung der durch Betätigung von Radbremsen erreichbaren Gesamtverzögerungswerte eines Nutzfahrzeugs oder einer Fahrzeugkombination mit mehreren Achsen. Ferner zeigt diese Druckschrift eine Bremsanlage zur Durchführung des Verfahrens sowie ein Nutzfahrzeug oder eine Fahrzeugkombination mit einer solchen Bremsanlage zur Durchführung des Verfahrens. Um während der Fahrt die aktuell erreichbaren Gesamtverzögerungswerte zur Verzögerung eines Nutzfahrzeugs oder einer Fahrzeugkombination mit mehreren Achsen zu bestimmen, ist vorgesehen, dass zur Umsetzung einer Verzögerungsanforderung bei Teilbremsungen eine Bremskraftverteilung mit ungleich auf Bremseneinheiten mit den Radbremsen einer oder mehrerer Achsen verteilten Bremskräften erfolgt, wobei jeweils eine der Bremseneinheiten ausgewählt wird und über diese ausgewählte Bremseneinheit eine größere Bremskraft aufgebracht wird als über die anderen Bremseneinheiten, wobei eine aktuelle Verzögerung des Nutzfahrzeugs oder der Fahrzeugkombination gemessen oder ermittelt wird und als entsprechender Teilverzögerungswert der jeweils ausgewählten Bremseneinheit zugeordnet und abgespeichert wird.

Diese Aufgabe wird durch das Verfahren zur Verzögerungsregelung nach Anspruch 1, das Bremssystem nach Anspruch 8 gelöst.

Ein Aspekt der Erfindung betrifft ein Verfahren zur Verzögerungsregelung eines Fahrzeugs, insbesondere eines Nutzfahrzeugs, wobei das Fahrzeug eine zentrale Steuereinheit, einen ersten Bremskreis für eine Hinterachse und einen zweiten Bremskreis für eine Vorderachse umfasst, wobei von der zentralen Steuereinheit bei einer elektronisch angeforderten Verzögerungsanforderung unterhalb eines vorgegebenen Verzögerungsschwellwerts nur der Bremskreis für die Achse aus Hinterachse und Vorderachse aktiviert wird und bevorzugt aktiviert bleibt solange die Verzögerungsanforderung den vorgegebenen Verzögerungsschwellenwert nicht überschreitet, der die feinste Abstufung bei einer Druckänderung für eine im Wesentlichen kontinuierliche, ruckfreie Verzögerungsmanipulation erlaubt.

Dass das Fahrzeug eine Vorderachse umfasst, bedeutet nicht, dass das Fahrzeug nur eine einzige Vorderachse umfasst, sondern umfasst die Bedeutung, dass das Fahrzeug mehr als eine einzige Vorderachse hat, sprich zwei, drei oder mehr Vorderachsen. Gleiches gilt für die Hinterachse, bei der eine Hinterachse ebenfalls nicht für eine einzige Hinterachse steht.

Umfasst das Fahrzeug mehr als eine einzige Vorder- und/oder Hinterachse, kann der erste Bremskreis alle Hinterachsen bedienen und der zweite Bremskreis alle Vorderachsen. Bei mehreren Vorder- und/oder Hinterachsen kann jede der Vorderachsen und/oder der Hinterachsen einen eigenen Bremskreis umfassen, oder mehrere der Achsen werden von einem gemeinsamen Bremskreis abgebremst. Entsprechend kann die Achse mit der feinsten Abstufung bei einer Druckänderung für eine im Wesentlichen kontinuierliche, ruckfreie Verzögerungsmanipulation eine einzige Achse der mehreren Vorder- oder Hinterachsen sein, oder die entsprechende Verzögerungsmanipulation wird durch einen Bremskreis an zwei oder mehr Achsen oder an allen Achsen bewirkt.

Bei dem Verfahren bleibt die andere Achse von Hinterachse und Vorderachse, deren Bremskreis bei der Verzögerungsanforderung unterhalb des Verzögerungsschwellenwerts nicht zugeschaltet wird, weitestgehend druckfrei. Im Rahmen dieser Anmeldung fällt auch das Einsteuern des Anlagedrucks in den Bremskreis unter den Begriff "weitestgehend druckfrei".

Mit anderen Worten wird bei der genannten Verzögerungsanforderung nur der Bremskreis für die Vorderachse/n oder die Hinterachse/n aktiviert, der ein sanftes und/oder im Wesentlichen ruckfreies Abbremsen ermöglicht.

Die Bremskraft an einer von der Hinterachse und der Vorderachse kann über eine ABS-Architektur und die andere der Hinterachse (HA) und der Vorderachse (VA) durch einen Achsmodulator geregelt werden. Das heißt, die ABS-Architektur oder der Achsmodulator erzeugen an entsprechenden Bremsen eine Bremskraft, die auf die Achse wirkt und damit das Fahrzeug abbremst oder negativ beschleunigt.

Bei der ABS-Architektur wird Druckluft im Bremskreis über ein Ventil, beispielsweise ein Relaisventil, ABS-SMV Einheiten zugeleitet, die in bekannter Weise auf die jeweiligen Bremsen einwirken und dadurch die Räder abbremsen und bei einer Radblockade den Bremsdruck reduzieren, um das Blockieren sofort zu beenden. Bevorzugt ist für jedes Rad eine ABS-SMV Einheit vorgesehen, die auf die Bremse für das jeweilige Rad wirkt, wodurch die entsprechende Achse von Vorderachse und Hinterachse abgebremst wird.

Bei dem Achsmodulator wird die Druckluft des entsprechenden Bremskreises einer Ventilanordnung zugeführt, die wenigstens ein Relaisventil und/oder wenigstens eine ABS-SMV Einheit und/oder wenigstens ein Magnetventil umfasst. Der Achsmodulator erzeugt eine Bremskraft, die über entsprechende Bremsen auf die von der Achse angetriebenen Räder einwirkt.

Bevorzugt wird von der zentralen Steuereinheit nur der Bremskreis der Achse aktiviert, deren Verzögerung über die abrufbare Bremskraft des Achsmodulators geregelt wird, da der Achsmodulator besser dazu geeignet ist, die im Wesentlichen ruckfreie Abbremsung des Fahrzeugs zu ermöglichen.

Bevorzugt wird von der zentralen Steuereinheit die Achse von Vorderachse und Hinterachse mit der feineren Abstufung der Druckänderung aktiviert, wenn die elektronische Verzögerungsanforderung in einem Bereich zwischen 0 m/sek$^2$ und 3 m/sek$^2$, bevorzug zwischen 0 m/sek$^2$ und 2,5 m/sek$^2$, und besonders bevorzugt zwischen 0 m/sek$^2$ und 2 m/sek$^2$ liegt. Darüber hinaus kann die untere Grenze statt bei 0 m/sek$^2$ auch bei 0,5, 0,75 oder 1 m/sek$^2$ oder auch höher oder zwischen diesen Werten liegen. Das heißt, das Verfahren ist besonders in einer Situation von Vorteil, in der die Geschwindigkeit des Fahrzeugs auf lange Sicht verlangsamt werden soll, oder zum Beispiel bei Kolonnenfahrt mit geringer Geschwindigkeit.

Ist die Verzögerungsanforderung zu Beginn des Bremsvorgangs über einem Verzögerungsschwellenwert von größer als 3 m/sek$^2$, bevorzugt größer 2,5 m/sek$^2$ und besonders bevorzugt größer 2 m/sek$^2$, oder steigt die Verzögerungsanforderung im Lauf des Bremsvorgangs über diesen Wert, kann durch die zentrale Steuereinheit automatisch zusätzlich der Bremskreis für die bisher nicht gebremste Achse aktiviert werden.

Alternativ oder zusätzlich kann ein Druckschwellenwert für die erste, feiner stufbare Fahrzeugachse vorgegeben werden, bei dessen Überschreitung die zweite, gröber stufbare Fahrzeugachse zur Verzögerung mit herangezogen wird.

Schließlich kann der Zeitpunkt, in dem die zweite, gröber stufbare Fahrzeugachse zur Verzögerung des Fahrzeugs herangezogen wird, in Abhängigkeit eines Differenzschlupfs der beiden Achsen bestimmt werden. Als Differenzschlupf wird in dieser Anmeldung eine auf die Geschwindigkeit der Vorderachse bezogene Differenz der Achsgeschwindigkeiten der beiden Fahrzeugachsen bezeichnet. Der Differenzschlupf wird üblicherweise durch die Formel

$$s = (v\_VA − v\_HA) / v\_VA$$

angegeben, wobei v_VA die Geschwindigkeit der Vorderachse und v_HA die Geschwindigkeit der Hinterachse ist.

Da aufgrund unterschiedlicher Achslasten unterschiedliche Reibwertausnutzungen und damit unterschiedliche Bremsschlüpfe bei gleichem Bremsdruck erreicht werden, bietet der Differenzschlupf ein gutes Maß für die Reibwertausnutzung.

Das heißt, zum Sichern der Fahrzeugstabilität und des Komforts beim Zuschalten der zweiten, gröber stufbaren Fahrzeugachse zur Verzögerung des Fahrzeugs kann jedes der vorhergehenden Kriterien (Verzögerungsschwellenwert, Druckschwellenwert, Differenzschlupf) einzeln herangezogen werden, oder es kann/können eine beliebige Kombination aus zwei der genannten Kriterien oder gemeinsam alle drei genannten Kriterien zur Bestimmung des Zeitpunkts der Zuschaltung der zweiten Fahrzeugachse dienen.

Bei der Zuschaltung des zusätzlich aktivierten Bremskreises kann im Bremssystem ein Druckeinsprung auftreten, der bevorzugt durch einen Druckabbau in dem Bremskreis mit der feineren Abstufung kompensiert wird.

Bevorzugt wird die Verzögerung der Hinterachse durch die von dem Achsmodulator erzeugte Bremskraft bewirkt, so dass die Hinterachse die Achse ist, mit der das Fahrzeug bei den genannten Verzögerungsanforderungen im Wesentlichen ruckfrei abgebremst werden kann.

Das Verfahren kann so ausgebildet sein, dass unabhängig von der Größe der elektronischen Verzögerungsanforderung, das heißt, auch wenn die Verzögerungsanforderung im Bereich zwischen 0 m/sek$^2$ und 3 m/sek$^2$, bevorzugt zwischen 0 m/sek$^2$ und 2,5 m/sek$^2$, und besonders bevorzugt zwischen 0 m/sek$^2$ und 2 m/sek$^2$liegt, der erste Bremskreis und der zweite Bremskreis von der zentralen Steuereinheit aktiviert wird, wenn eine Fahrgeschwindigkeit des Fahrzeugs im Moment der elektronischen Verzögerungsanforderung oberhalb eines vorgegebenen Geschwindigkeitsschwellwerts liegt.. Darüber hinaus kann die untere Grenze statt bei 0 m/sek$^2$ auch bei 0,5, 0,75 oder 1 m/sek$^2$ oder auch höher oder zwischen diesen Werten liegen.

Ein zweiter Aspekt der Erfindung betrifft ein Bremssystem für ein Fahrzeug, vorzugsweise Nutzfahrzeug, mit einer zentralen Steuereinheit, einem Betätigungselement für das Bremssystem mit einem bevorzugt digitalen Bremsventil, einem ersten Bremskreis für eine Hinterachse und einem zweiten Bremskreis für eine Vorderachse, wobei die zentrale elektronische Steuereinheit in Abhängigkeit von einer Fahrgeschwindigkeit des Fahrzeugs und/oder einer Verzögerungsanforderung durch die elektronische Anforderung einer Verzögerung allein den ersten oder zweiten Bremskreis aktiviert und bei den entsprechenden Systembedingungen aufrechterhält, der die feinsten Abstufungen bei der Druckänderung für eine im Wesentlichen kontinuierliche, ruckfreie Verzögerungsmanipulation hat. Das heißt, es wird zunächst nur der Bremskreis zugeschaltet, in dem eine auf die Achse einwirkende Bremskraft am Feinsten moduliert werden kann, so dass das Fahrzeug insbesondere ruckfrei angebremst und kontinuierlich und ruckfrei abgebremst wird. Das Bremssystem ist vorzugsweise als pneumatisches Bremssystem, insbesondere als elektronisch steuerbares pneumatisches Bremssystem ausgebildet.

Die Aktivierung nur der einen Achse kann solange aufrechterhalten werden, bis das Fahrzeug zum Stillstand kommt oder die elektronische Anforderung der Verzögerung einen vorgegebenen Verzögerungsschwellwert überschreitet oder die Fahrgeschwindigkeit des Fahrzeugs sich in einer Weise ändert, dass die elektronische Steuereinheit automatisch die Zuschaltung des zunächst nicht aktivierten Bremskreises veranlasst.

Umfasst das Fahrzeug mehr als eine einzige Vorder- und/oder Hinterachse, kann der erste Bremskreis alle Vorderachsen bedienen und der zweite Bremskreis alle Hinterachsen. Bei mehreren Vorder- und/oder Hinterachsen kann jede der Vorderachsen und/oder jede der Hinterachsen einen eigenen Bremskreis umfassen, oder mehrere der Achsen werden von einem gemeinsamen Bremskreis abgebremst. Entsprechend kann die Achse mit der feinsten Abstufung bei einer Druckänderung für eine im Wesentlichen kontinuierliche, ruckfreie Verzögerungsmanipulation eine einzige Achse der mehreren Vorder- oder Hinterachsen sein, oder die entsprechende Verzögerungsmanipulation wird durch einen Bremskreis an zwei oder mehr Achsen oder an allen Achsen bewirkt.

Der von der zentralen Steuereinheit nicht aktivierte erste oder zweite Bremskreis kann zumindest im Wesentlichen druckfrei sein, so dass auf diese Achse keine Bremskraft wirkt.

Der erste Bremskreis oder der zweite Bremskreis kann eine ABS-Architektur umfassen oder aufweisen, der andere aus erstem Bremskreis und zweitem Bremskreis kann einen Achsmodulator umfassen.

Bevorzugt aktiviert die zentrale Steuereinheit in Abhängigkeit von der Fahrgeschwindigkeit des Fahrzeugs und/oder der Verzögerungsanforderung, insbesondere durch eine elektronische Verzögerungsanforderung, nur den Bremskreis der Achse von Vorderachse und Hinterachse, der die Verzögerung der Achse über die Bremskraft des Achsmodulators regelt.

Bevorzugt beträgt eine maximal zulässige Verzögerungsanforderung, bei der nur die eine Achse mit der feinsten Druckabstufung aktiviert ist, zwischen 0 m/sek$^2$ und 3 m/sek$^2$, bevorzug zwischen 0 m/sek$^2$ und 2,5 m/sek$^2$, und besonders bevorzugt zwischen 0 m/sek$^2$ und 2 m/sek$^2$. Darüber hinaus kann die untere Grenze statt bei 0 m/sek$^2$ auch bei 0,5, 0,75 oder 1 m/sek$^2$ oder auch höher oder zwischen diesen Werten liegen. Wird die maximal zulässige Verzögerungsanforderung überschritten, kann die elektronische Steuereinheit automatisch zusätzlich den Bremskreis mit der ABS-Architektur aktivieren. Wenn die Fahrgeschwindigkeit des Fahrzeugs über einem vorgegebenen Geschwindigkeitsschwellenwert liegt, kann die zentrale Steuereinheit bei jeder Verzögerungsanforderung, das heißt, unabhängig vom Wert der Höhe der Verzögerungsanforderung, den ersten Bremskreis und den zweiten Bremskreis aktivieren. Der Geschwindigkeitsschwellenwert kann zum Beispiel 60 km/h oder 20km/h oder weniger sein, oder jeden anderen Wert haben.

Bei der Zuschaltung der Achse mit der ABS-Architektur kann ein Druckeinsprung im Bremskreis mit der ABS-Architektur auftreten, welchen die zentrale Steuereinheit durch eine Druckänderung in dem Bremskreis mit dem Achsmodulator kompensiert. Diese Druckänderung kann in Anhängigkeit von der Höhe des Druckeinsprungs bei jedem Zuschalten des Bremskreises mit der ABS-Architektur unterschiedlich sein.

Der Achsmodulator kann wenigstens ein Relaisventil und/oder ein ABS-SMV und/oder ein 3/2-Wege-Magnetventil umfassen.

Ein dritter Aspekt der Erfindung betrifft ein Nutzfahrzeug, mit einem Bremssystem nach dem zweiten Aspekt, geeignet zur Durchführung eines Verfahrens nach dem ersten Aspekt. Das heißt, der dritte Aspekt betrifft ein Nutzfahrzeug, welches ein Verfahren nach einem der Ansprüche 1 bis 10 ausführen kann bzw. durchführt.

Es versteht sich, dass Merkmale, die nur zu dem Verfahren beschrieben wurden, auch das Bremssystem vorteilhaft weiterbilden können, und umgekehrt Merkmale, die nur für das Bremssystem beschrieben wurden, das Verfahren vorteilhaft weiterbilden können.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:

Figur 1:    einen schematischen Aufbau eines Bremssystems;

Figur 2:    ein erstes Bremsdruckprofil;

Figur 3:    ein zweites Bremsdruckprofil;

Figur 4:    ein drittes Bremsdruckprofil;

Figur 5:    ein viertes Bremsdruckprofil;

Figur 6:    Diagramme für Druckschwellenwert, Diffe-
            renzschlupfschwellenwert und Verzöge-
            rungsschwellenwert über der Zeit in einem
            ersten Ausführungsbeispiel; und in

Figur 7:    Diagramme für Druckschwellenwert, Diffe-
            renzschlupfschwellenwert und Verzöge-
            rungsschwellenwert über der Zeit in einem
            zweiten Ausführungsbeispiel.

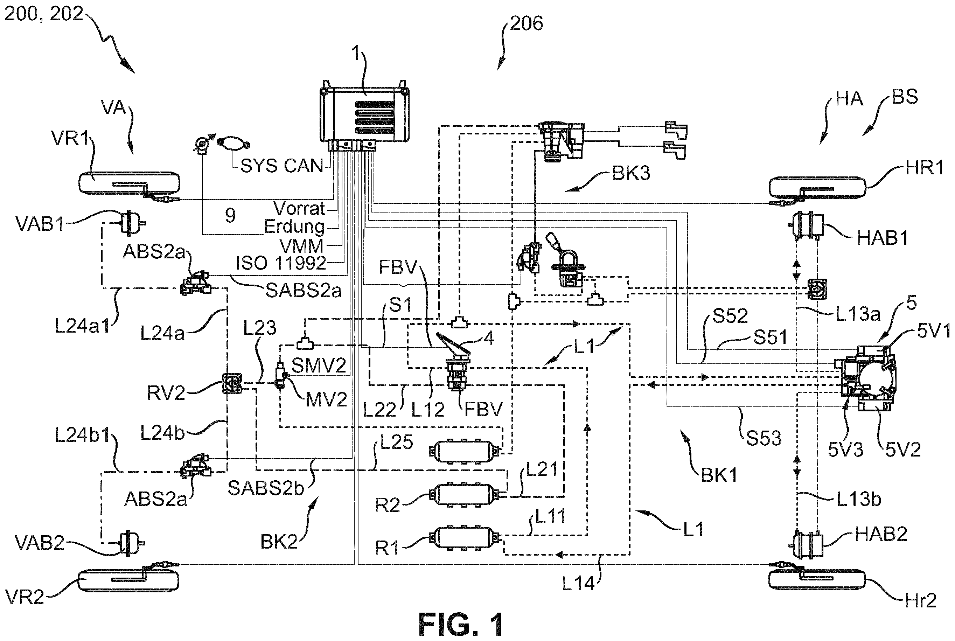

Die Figur 1 zeigt in einer Skizze den Aufbau eines Bremssystems 206 für ein Fahrzeugs 200 oder Nutzfahrzeug 202 mit wenigstens einer Vorderachse VA und wenigstens einer Hinterachse HA und optional einem Anhänger, der von dem Nutzfahrzeug 202 gezogen wird.

Dazu umfasst das Bremssystem 206 des Ausführungsbeispiels einen Bremskreis BK1 für die Hinterachse HA, einen Bremskreis BK2 für die Vorderachse VA und einen Bremskreis BK3, der einen mit dem Nutzfahrzeug 202 verbundenen Anhänger abbremsen kann und einer Feststellbremse für das Nutzfahrzeug 202 zugeordnet ist. Der Bremskreis BK3 wird im folgenden Text nicht ausgeführt, da er für das beanspruchte Verfahren und das dazu angepasste Bremssystem 206 nicht von Bedeutung ist.

Das Bremssystem 206 umfasst ferner eine elektronische Steuereinheit (ECU) 1 zur Ansteuerung und Kontrolle der Bremskreise BK1, BK2 und BK3.

Der Bremskreis BK1 für die Hinterachse HA umfasst ein Reservoir R1 für ein Druckfluid, vorzugsweise Druckluft, und ein Leitungssystem L1, das das Reservoir R1 mit der Hinterachse HA, respektive einem Achsmodulator 5 zur Beaufschlagung der Bremsen HAB1, HAB2 der Hinterachse HA mit einem Bremsdruck zur Erzeugung einer Bremskraft, verbindet. Das Leitungssystem L1 umfasst einen ersten Leitungsabschnitt L11, der das Reservoir R1 mit einem Bremspedal 4, respektive einem über das Bremspedal 4 direkt oder indirekt betätigtes Fußbremsventil FBV verbindet. Im Ausführungsbeispiel ist das Fußbremsventil FBV über eine Steuerleitung S1 mit der Kontrolleinheit 1 verbunden, so dass das Fußbremsventil FBV im Ausführungsbeispiel elektronisch ausgelesen werden kann.

Das Fußbremsventil FBV kann den ersten Leitungsabschnitt L11 mit einem zweiten Leitungsabschnitt L12 verbinden, der unmittelbar zu dem Achsmodulator 5 führt.

Der Achsmodulator 5 kann unterschiedliche Ventile umfassen, beispielsweise Relaisventile 5V1 und/oder ABS-Ventile 5V2 und/oder getaktete oder kontinuierliche Drucksteuerventile/Druckregelventile 5V3, etc. Jedes der Ventile 5V1, 5V2, 5V3 ist über eine Steuerleitung S51, S52, S53 mit der Steuereinheit 1 verbunden. Die Ventile 5V1, 5V2, 5V3 können von der Steuereinheit 1 einzeln angesteuert und geregelt werden. Das heißt, zum Erzeugen einer Bremskraft an der Hinterachse HA kann nur eines der Ventile 5V1, 5V2, 5V3 aktiv sein oder mehrere der Ventil 5V1, 5V2, 5V3 oder alle Ventile 5V1, 5V2, 5V3. Die Schaltung der Ventile 5V1, 5V2, 5V3 durch die Steuereinheit 1 kann zum Beispiel abhängig von der aktuellen Fahrgeschwindigkeit des Nutzfahrzeugs 202, der Betätigung des Fußbremsventils FBV (Druck und/oder Geschwindigkeit, der/die auf das Bremspedal einwirken), die eine Größe einer Verzögerungsanforderung signalisiert, zum Beispiel Vollbremsung oder nur sanfte Verzögerung wie zum Beispiel im Kolonnenverkehr, und anderen Parametern, wie Außentemperatur, Gesamtgewicht des Nutzfahrzeugs, etc. bestimmt werden. Von dem Achsmodulator 5 wird das Bremsfluid über einen ersten dritten Leitungsabschnitt L13a an die Bremse HAB1 des ersten Hinterrads HR1 und über einen zweiten dritten Leitungsabschnitt L13b an die Bremse HAB2 des zweiten Hinterrads HR2 weitergeleitet.

Mit dem Achsmodulator 5 mit der Kombination der unterschiedlichen Ventile 5V1, 5V2, 5V3 kann insbesondere die an den Bremsen HAB1, HAB2 der Hinterachse HA angreifende Bremskraft in kleinen Schritten manipuliert, das heißt, verstärkt, werden, so dass die Hinterachse HA je nach der Verzögerungsanforderung durch die Steuereinheit 1 im Wesentlichen ruckfrei abgebremst werden kann. Dies ist vorteilhaft für den Fahrkomfort des Personals und schont das Material, wie beispielsweise Reifen und Federung, was zu längeren Standzeiten führt und damit Kosten spart.

In dem Achsmodulator 5 kann, bei einer Verzögerungsanforderung, die unter einem vorgegebenen Grenzwert liegt, durch die Steuereinheit 1 der an wenigstens einem der Ventile 5V1, 5V2, 5V3 anliegende, vom elektronischen Fußbremsventil FBV kommende Druck reduziert werden und der reduzierte Druck kann über den ersten und den zweiten Leitungsabschnitt L13a, L13b zu der Bremse HAB1, HAB2 des entsprechenden Hinterrads HR1, HR2 gleitet werden, um das Fahrzeug 200 unter gewissen Bedingungen sanft abzubremsen.

Im gezeigten Bremssystem ist in dem ersten Leitungssystem L1 ein Ventil V1 vorgesehen, das den ersten Bremskreis BK1 mit dem dritten Bremskreis BK3 für einen optionalen Anhänger verbindet.

Der zweite Bremskreis BK2 für die Vorderachse VA umfasst ein Reservoir R2 für ein Bremsfluid, bevorzugt Druckluft. Der zweite Bremskreis BK2 umfasst ein Leitungssystem L2 mit einem ersten Leitungsabschnitt L21, der ein Reservoir R2 mit dem elektronischen Fußbremsventil FBV und einen zweiten Leitungsabschnitt L22, der das Bremsfluid vom Fußbremsventil FBV zu einem Ventil, im gezeigten Bremssystem 206 einem Magnetventil MV2, leitet und einen dritten Leitungsabschnitt L23, der das Bremsfluid vom Magnetventil MV2 zu einem Relaisventil RV2 leitet. Vom Relaisventil RV2 wird das Bremsfluid über einen ersten vierten Leitungsabschnitt L24a zu einem ABS Ventil ABS2a für die Bremse VAB1a geleitet und über einen zweiten vierten Leitungsabschnitt L24b zu einem ABS Ventil ABS2b.

Von den ABS Ventilen ABS2a und ABS2b wird das Bremsfluid über weitere Leitungsabschnitte L24a1 beziehungsweise L24b1 an die Bremsen VAB1 beziehungsweise VAB2 weitergeleitet, wodurch die Räder VR1 und VR2 der Vorderachse VA abgebremst werden.

Im gezeigten Bremssystem 206 ist in dem zweiten Leitungssystem L2 ein Ventil V2 vorgesehen, das den zweiten Bremskreis BK2 mit einem weiteren dritten Bremskreis BK3 verbindet. Der weitere dritte Bremskreislauf BK3 ist für die Erfindung irrelevant und wird daher nicht weiter beschrieben.

Das Fußbremsventil FBV kann bei einer Verzögerungsanforderung über das Bremspedal 4 nur die Leitungsabschnitte L11 und L12 des ersten Bremskreises BK1 miteinander verbinden, oder bei einer entsprechend größeren Verzögerungsanforderung die Leitungsabschnitte L11 und L12 des ersten Bremskreises BK1 und die Leitungsabschnitte L21 und L22 des zweiten Bremskreises BK2 miteinander verbinden. Wird vom Fußbremsventil FBV nur der erste Bremskreis BK1 der Hinterachse HA aktiviert, so kann/können in Abhängigkeit von der Verzögerungsanforderung zunächst und im Laufe des gesamten Abbremsvorgangs wahlweise eines oder mehrere oder alle der Ventile B1V, B2V, B3V aktiviert werden. Dabei wird die Schaltung oder Zuschaltung der Ventile B1V, B2V, B3V von der Steuereinheit 1 so gesteuert, dass das Nutzfahrzeug 202 sanft, insbesondere ruckfrei abgebremst wird. Der Bremsvorgang kann zum Beispiel bei der Auffahrt auf eine langsam fahrende Kolonne solange dauern, bis die Kolonnengeschwindigkeit erreicht wurde und anschließend während der Kolonnenfahrt immer wieder durchgeführt werden, oder mit dem Stillstand des Nutzfahrzeugs 202 enden.

Reicht die durch den ersten Bremskreis BK1 der Hinterachse HA generierbare Verzögerung nicht aus, um das Nutzfahrzeug 202 auf einer verbleibenden Strecke sanft abzubremsen, wird durch eine entsprechende Betätigung des Bremspedals 4 über das Fußbremsventil FBV der zweite Bremskreis BK2 der Vorderachse VA zugeschaltet, so dass jetzt die Räder HR1, HR2 der Hinterachse HA und die Räder VR1, VR2 der Vorderachse VA aktiv über die jeweilige Bremse HAB1, HAB2 beziehungsweise VAB1, VAB2 abgebremst werden.

Das Magnetventil MV2 ist über eine Signalleitung SMV2 mit der Steuereinheit 1 verbunden, und die ABS Ventile ABS2a und ABS2b sind jeweils über eine Signalleitung SABS2a beziehungsweise SABS2b mit der Steuereinheit 1 verbunden. Bei der Steuereinheit 1 handelt es sich um eine zentrale Steuereinheit für das Bremssystems 206, das über entsprechende nichtbenannte Signalleitungen zusätzlich Signale von allen Rädern HR1, HR2, VR1, VR2, einer elektronischen Stabilitätskontrolle (ESC Modul) 8 und weiteren Funktionsteilen des Bremssystems 206 empfangen und/oder an diese senden kann, um das in den Ansprüchen 1 bis 10 beanspruchte Verfahren, mit dem das Fahrzeug 200 oder Nutzfahrzeug 202 sanft und/oder ruckfrei abgebremst werden kann, auszuführen. Bei den Signalen kann es sich um Messsignale handeln, die für eine gemessene Geschwindigkeit, Temperatur etc. stehen, oder um Schalt- oder Stellsignale, die eine Öffnen und Schließen zum Beispiel der genannten Ventile regelt. Die Signalleitungen können körperliche Leitungen sein, die Teil eines Kabelbaums sind, bevorzugt handelt es sich um Funkverbindungen, die die Informationen kabelfrei übertragen.

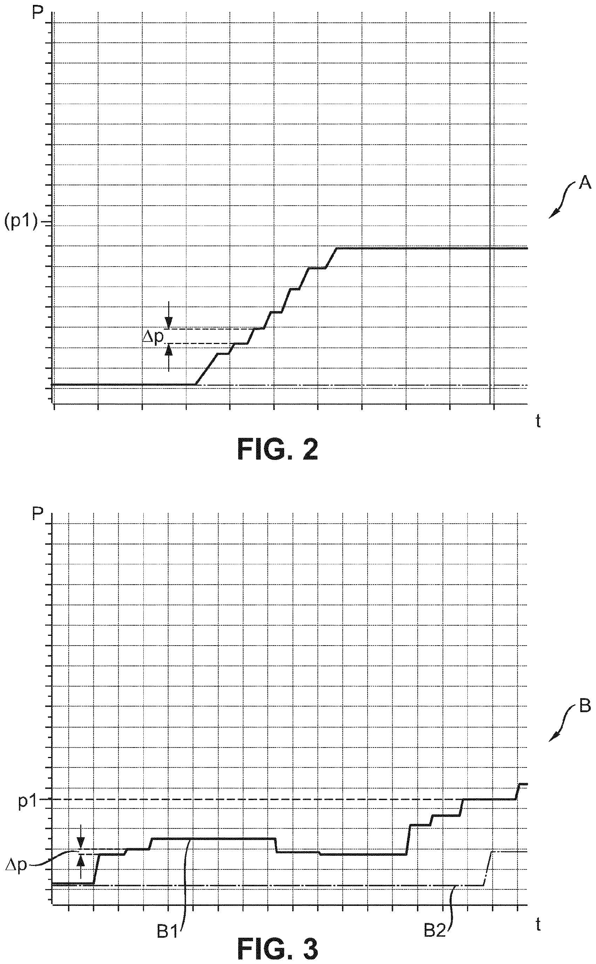

Die Figur 2 zeigt ein erstes Bremsdruckprofil A in einem Diagramm, das eine Druckänderung über eine Zeit angibt, wobei auf der X-Achse die Zeit in Sekunden dargestellt ist und auf der Y-Achse der Druck. Das Bremsdruckprofil A der Figur 2 kann das Bremsdruckventil eines Fahrzeugs 200 oder Nutzfahrzeugs 202 an einer Vorderachse VA oder Hinterachse HA sein, und beispielsweise von einem ABS Ventil oder einer ABS Architektur ABS2a, ABS2b erzeugt werden.

Die Figur 3 zeigt ein zweites Bremsdruckprofil B, ebenfalls in der Diagrammansicht der Figur 2. Das Bremsdruckprofil B ist durch Ventile erzeugt, die nacheinander geschaltet werden. Zunächst wird ein erstes Ventil geschaltet, welches das Bremsdruckteilprofil B1 erzeugt, bei dem der Bremsdruck sanft erhöht wird, so dass eine im Wesentlichen ruckfreie Verzögerung erzeugt werden kann. Sobald der Bremsdruck, der über das erste Ventil erzeugt wird, einen vorgegebenen maximalen Wert p1 erreicht, schaltet beispielsweise die Steuereinheit 1 ein zweites Ventil, das sich von der Bauart des ersten Ventils unterscheiden kann, zu, so dass das Bremsdruckteilprofil B1 jetzt durch das Bremsdruckteilprofil B2 ergänzt wird, die beiden Bremsdruckteilprofile B1, B2 das Bremsdruckprofil B bilden. Das Bremsdruckprofil B kann beispielsweise von einem Achsmodulator 5 mit mehr als einem Ventil 5V1, 5V2, 5V3 erzeugt werden. Das Bremsdruckprofil der Figur 3 kann beispielsweise das Bremsdruckprofil einer Achse, Hinterachse HA oder Vorderachse VA, eines Fahrzeugs 200 oder Nutzfahrzeugs 202 sein.

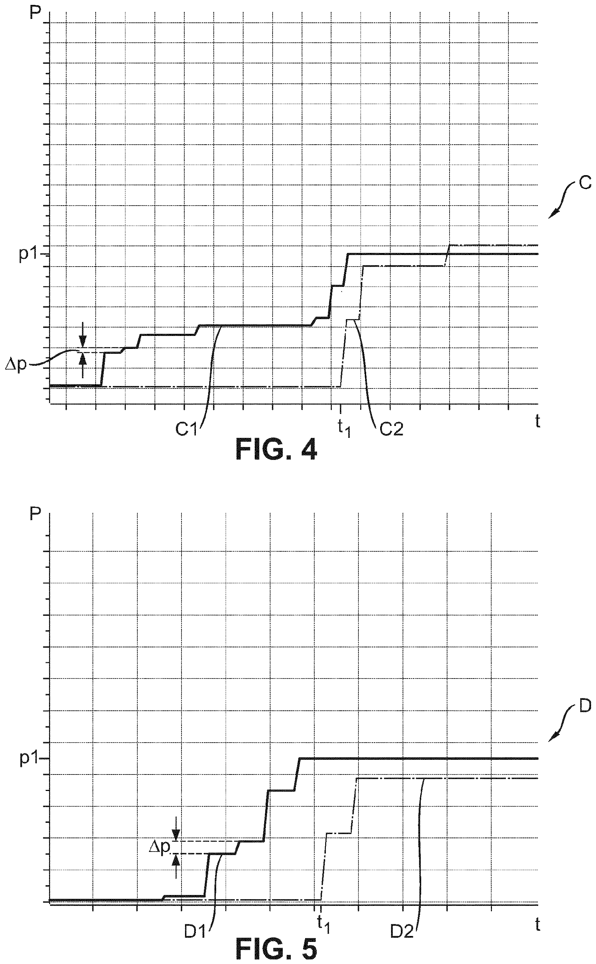

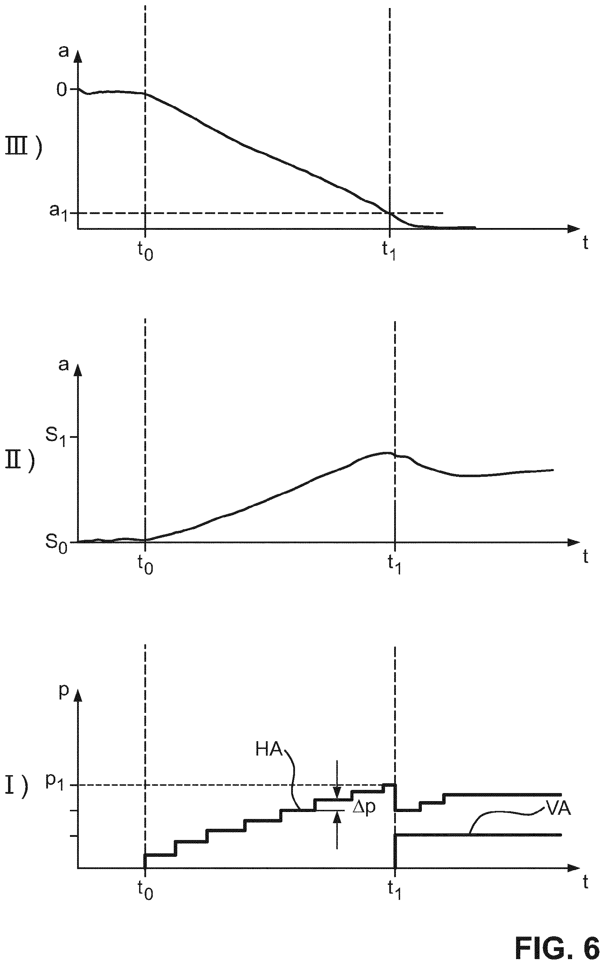

Die Figur 4 zeigt ein drittes Bremsdruckprofil C, das durch die Überlagerung eines ersten Bremsdruckteilprofile C1, wie es beispielsweise von der ABS-Architektur ABS2a, ABS2b erzeugt und in der Figur 2 gezeigt wird, mit einem zweiten Bremsdruckteilprofil C2, beispielsweise einem Achsmodulator 5, wie in der Figur 3 beispielhaft gezeigt, gebildet ist. Zunächst wird das Nutzfahrzeug 202 in einem ersten Schritt im Wesentlichen ruckfrei an nur einer Achse aus Hinterachse HA und Vorderachse VA abgebremst, bis der Bremsdruck auf einen Wert p1 angestiegen ist. Beim Erreichen dieses Drucks p1 liegt eine aktuelle Verzögerungsanforderung oberhalb eines vorgegebenen Verzögerungsschwellenwerts, so dass zusätzlich die andere Achse von Hinterachse HA und Vorderachse VA aktiviert wird, um das Nutzfahrzeug 202 gemäß der Verzögerungsanforderung abzubremsen. Bei dieser Zuschaltung der anderen Achse kann es durch einen nicht dargestellten Druckeinsprung, das heißt, eine Erhöhung des Drucks im Bremssystem 206 über einen Soll-Wert für die Verzögerungsanforderung, kommen, der dadurch kompensiert wird, dass die zentrale Kontrolleinheit 1 einen Druck im Bremskreis mit dem Bremsdruckteilprofil C1 senkt (vgl. hierzu Figur 6).

Die Figur 5 ist eine vergrößerte Detaildarstellung eins Bremsdruckprofils D mit einem Bremsdruckteilprofil D1 eines ersten Ventils und einem Bremsdruckteilprofil D2 eines zweiten Ventils. Aufgrund einer Fahrgeschwindigkeit des Nutzfahrzeugs 202 und/oder aufgrund einer Verzögerungsanforderung des Nutzfahrzeugs 202 über einem vorgegebenen Grenz- oder Schwellenwert wird zunächst an der Achse aus Hinterachse HA und Vorderachse VA angebremst, die die ABS-Struktur ABS2a, ABS2b aufweist. Diese erste An- oder Abbremsung wird im Bremsdruckteilprofil D1 gezeigt. Kurz danach wird zusätzlich die weitere Achse aus Hinterachse HA und Vorderachse VA abgebremst. Das erste Ventil kann beispielsweise durch eine ABS Architektur ABS2a, ABS2b gebildet sein, das zweite Ventil durch den Achsmodulator 5. Sobald der Bremsdruck p des ersten Bremsdruckteilprofils D1 den Druckschwellenwert p1 erreicht oder überschreitet, wird das zweite Ventil hinzugeschaltet, um so die andere Achse einzubremsen. Dies geschieht im Zeitpunkt t1.

Die Figur 6 zeigt im Diagramm I) den zeitlichen Verlauf eines Druckaufbaus an der Hinterachse HA bis zu dem Druckschwellenwert $p_1$, bei dem zur Unterstützung der Verzögerung a des Fahrzeugs 200 die Vorderachse VA automatisch zugeschaltet wird.

Die Hinterachse HA ermöglicht eine im Wesentlichen kontinuierliche, ruckfreie Verzögerung a des Fahrzeugs 200, da der Druckaufbau an den Bremsen HAB1, HAB2 in kleinen Schritten erfolgt, das heißt, ein Vielzahl von kleinen Druckdifferenzen $\Delta p$ auftreten, die vom Fahrer des Fahrzeugs 200 nicht wahrgenommen werden. Beim Erreichen des Druckschwellenwerts p1 im Bremskreis BK1, wird automatisch der zweite Bremskreislauf BK2 zum Zeitpunkt t1 aktiviert, der auf die Vorderachse VA des Fahrzeugs 200 wirkt.

Mit $t_0$ auf der Zeitachse t ist der Zeitpunkt angegeben, an dem der Fahrer des Fahrzeugs 200 die Verzögerung a durch Betätigung des Bremspedals 4 einleitet, so dass das Fahrzeug zunächst nur mithilfe der Hinterachse HA abgebremst wird. Zum Zeitpunkt $t_1$ wird die Vorderachse VA zum weiteren Abbremsen des Fahrzeugs 200 automatisch aufgeschaltet, so dass das Fahrzeug 200 jetzt von der Hinterachse HA und der Vorderachse VA abgebremst wird.

In der hier gezeigten Variante wird zum Zeitpunkt $t_1$ nicht nur die Vorderachse VA zugeschaltet, sondern gleichzeitig der Druck p an der Hinterachse HA um einen Betrag reduziert, der vorzugsweise etwa dem zugeschalteten Betrag an der Vorderachse VA entspricht. Dies ist vorteilhaft, um einen zu starken Druckeinsprung und damit ein zu starkes plötzliches Abbremsen zu vermeiden, da das Fahrzeug ab dem Zeitpunkt $t_1$ über beide Achsen VA, HA gebremst wird. Nach dem Zeitpunkt $t_1$ kann dann der Druck p an der Hinterachse HA weiter kontinuierlich erhöht werden, wenn dies gewünscht oder erforderlich ist.

Das Diagramm II) zeigt den Differenzschlupf s zwischen Vorderachse VA und Hinterachse HA an. Der Differenzschlupf s ist eine auf die Geschwindigkeit der Vorderachse VA bezogene Differenz der Achsgeschwindigkeiten v_VA, v_HA der beiden Fahrzeugachsen VA, HA. Der Differenzschlupf s kann mit der Formel s = (v_VA - v_HA) / v_VA ermittelt werden, wobei v_VA die Geschwindigkeit der Vorderachse und v_HA die Geschwindigkeit der Hinterachse ist.

Der Differenzschlupf s steigt im Diagramm II) vom Zeitpunkt $t_0$, an dem der Fahrer des Fahrzeugs 200 die Verzögerung a einleitet, von einem zu diesem Zeitpunkt gemessenen Ist-Wert $s_0$ an, bis er einen vorgegebenen Differenzschlupfschwellenwert $s_1$ erreicht. Beim Erreichen des Differenzschlupfschwellenwerts $s_1$ wird automatisch der Bremskreis BK2 der Vorderachse VA aktiviert.

Das Diagramm III) zeigt einer Verzögerung a des Fahrzeugs 200 über der Zeit t, vom Beginn der Verzögerungsanforderung $t_0$, bei dem die Bremsen HAB1, HAB2 der erste Fahrzeugachse HA aktiviert werden, um das Fahrzeug 200 zu verzögern. Beim Erreichen eines vorgegebenen Verzögerungsschwellenwerts $a_1$ zum Zeitpunkt $t_1$ wird automatisch die zweiten Fahrzeugachse VA, respektive deren Bremsen VAB1, VAB2 zugeschaltet, so dass das Fahrzeug 200 jetzt an der Vorderachse VA und an der Hinterachse HA gebremst wird.

In der Figur 6 sind drei mögliche Kriterien, nämlich Druckschwellenwert $p_1$, Differenzschwellenwert $s_1$ und Verzögerungsschwellenwert $a_1$ gezeigt, die herangezogen werden können, um den Zeitpunkt der Zuschaltung der VA für den Verzögerungsvorgang zu bestimmen.

Jedes dieser drei Kriterien kann allein herangezogen werden, um den Zeitpunkt zu bestimmen, an dem bei einer Verzögerung des Fahrzeugs 200 die Vorderachse VA zur Unterstützung der zunächst ausschließlich bremsenden Hinterachse HA aktiviert wird.

Der Zeitpunkt $t_1$ zur Zuschaltung der Vorderachse VA kann aber auch durch eine Kombination der Erfassung des Druckschwellenwerts $p_1$ und des Differenzschlupfschwellenwerts $s_1$ oder eine Kombination der Erfassung des Druckschwellenwerts $p_1$ mit dem Verzögerungsschwellenwert $a_1$ oder einer Kombination der Erfassung des Differenzschlupfschwellenwerts s1 mit dem Verzögerungsschwellenwert $a_1$ ermittelt werden.

Schließlich können aus dem Verzögerungsschwellenwert $a_1$ und dem Differenzschlupfschwellen-

wert $s_1$ und dem Druckschwellenwert $p_1$ in Kombination der Zeitpunkt $t_1$ ermittelt werden, indem die Vorderachse VA automatisch aktiviert werden muss, um das Fahrzeug 200 abzubremsen.

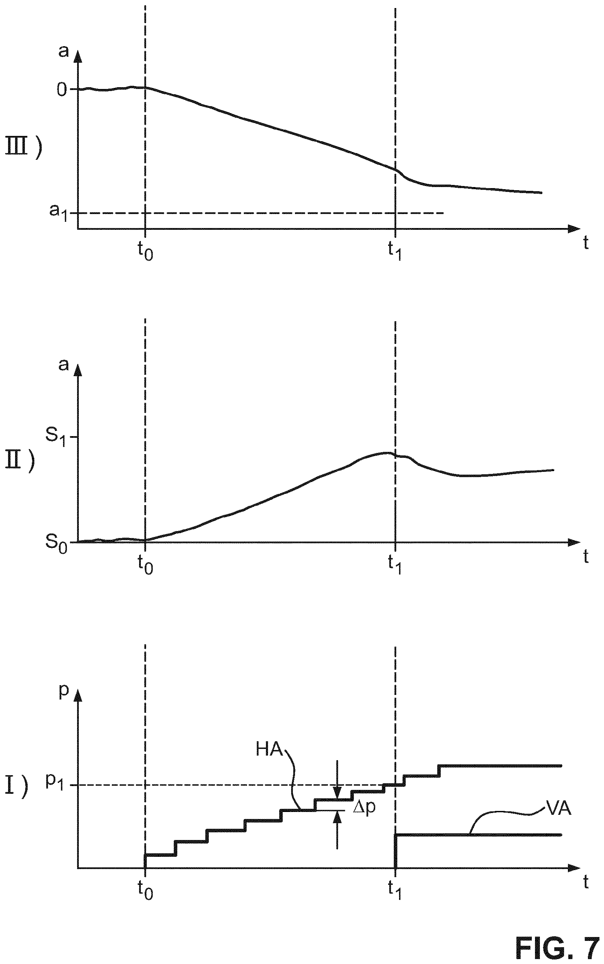

Figur 7 basiert auf Figur 6, zeigt aber eine Variante hierzu. Am besten ist in Diagramm I) der Figur 7 zu sehen, dass hier im Gegensatz zu Figur 6 der Bremsdruck an der Hinterachse HA nicht reduziert wird, wenn der Druckschwellenwert p1 erreicht wird. Es kommt also zu einem Druckeinsprung. Dies kann vorteilhaft sein, wenn beispielsweise der Sprung an der Vorderachse VA nur klein ist, oder die Verzögerungsanforderung hoch. Dies hat zur Folge, dass in Diagramm III) die Verzögerung nicht den Verzögerungsschwellwert a1 erreicht. Da aber der Differenzschlupfschwellenwert s1 und der Druckschwellenwert p1 erreicht werden, wir die Vorderachse VA zugeschaltet.

Bezugszeichenliste (Teil der Beschreibung)

| | |
|---|---|
| 1 | Steuereinheit (ECU) |
| 4 | Bremspedal |
| 5 | Achsmodulator |
| 5V1 | Ventil, Relaisventil |
| 5V2 | Ventil, ABS-Ventil |
| 5V3 | Ventil, Magnetventil |
| 8 | elektromische Stabilitätskontrolle (ESC Modul) |
| 200 | Fahrzeug |
| 202 | Nutzfahrzeug |
| 206 | Bremssystem |
| a | Verzögerung |
| $a_1$ | Verzögerungsschwellenwert |
| p | Druck |
| $P_1$ | Druckschwellenwert |
| $\Delta p$ | Druckdifferenz |
| s | Differenzschlupf |
| $s_1$ | Differenzschlupfschwellenwert |
| t | Zeit |
| $t_0$ | Beginn der Verzögerung |
| $t_1$ | Zuschaltung der VA |
| A | Bremsdruckprofil |
| ABS2a | ABS-Ventil, ABS-Architektur |
| ABS2b | ABS-Ventil, ABS-Architektur |
| B | Bremsdruckprofil |
| B1 | Bremsdruckteilprofil |
| B2 | Bremsdruckteilprofil |
| BK1 | Bremskreis |
| BK2 | Bremskreis |
| BK3 | Bremskreis |
| C | Bremsdruckventil |
| C1 | Bremsdruckteilprofil |
| C2 | Bremsdruckteilprofil |
| D | Bremsdruckprofil |
| D1 | Bremsdruckteilprofil |
| D2 | Bremsdruckteilprofil |

| | |
|---|---|
| FBV | Fußbremsventil |
| HA | Hinterachse |
| HAB1 | Bremse |
| HAB2 | Bremse |
| HR1 | Hinterrad |
| HR2 | Hinterrad |
| L1 | Leitungssystem |
| L11 | Leitungsabschnitt |
| L12 | Leitungsabschnitt |
| L13a | Leitungsabschnitt |
| L13b | Leitungsabschnitt |
| L2 | Leitungssystem |
| L21 | Leitungsabschnitt |
| L22 | Leitungsabschnitt |
| L23 | Leitungsabschnitt |
| L24a | Leitungsabschnitt |
| L24a1 | Leitungsabschnitt |
| L24b | Leitungsabschnitt |
| L24b1 | Leitungsabschnitt |
| MV2 | Magnetventil |
| R1 | Reservoir |
| R2 | Reservoir |
| RV2 | Relaisventil |
| S1 | Steuerleitung |
| S51 | Steuerleitung |
| S52 | Steuerleitung |
| S53 | Steuerleitung |
| SMV2 | Signalleitung |
| SABS2a | Signalleitung |
| SABS2b | Signalleitung |
| VA | Vorderachse |
| VAB1 | Bremse |
| VAB2 | Bremse |
| VR1 | Vorderrad |
| VR2 | Vorderrad |
| V1 | Ventil |

**Patentansprüche**

1. Verfahren zur Verzögerungsregelung eines Fahrzeuges (200), insbesondere eines Nutzfahrzeugs (202),

   wobei das Fahrzeug (200) eine zentrale Steuereinheit (1), einen ersten Bremskreis (BK1) für eine Hinterachse (HA) und einen zweiten Bremskreis (BK2) für eine Vorderachse (VA) umfasst,

   **dadurch gekennzeichnet, dass** von der zentralen Steuereinheit (1) bei einer elektronisch angeforderten Verzögerungsanforderung (a) unterhalb eines vorgegebenen Verzögerungsschwellwerts ($a_1$) allein der Bremskreis (BK1, BK2) für die Achse aus Hinterachse (HA) oder Vorderachse (VA) aktiviert wird und aktiviert bleibt, solange der vorgegebene Verzögerungsschwellwert ($a_1$) durch die Verzögerungsanforderung (a) nicht überschritten wird, der die feinste Abstufung ($\Delta p$) bei der Druckänderung für eine im Wesentlichen kontinuierliche, ruckfreie Verzögerungsmanipulation erlaubt.

2. Verfahren nach Anspruch 1, wobei die andere Achse von Hinterachse (HA) und Vorderachse (VA) druckfrei bleibt, deren Bremskreis (BK1, BK2) bei der Verzögerungsanforderung (a) unterhalb des Verzögerungsschwellwerts ($a_1$) nicht zugeschaltet wird.

3. Verfahren nach einem der vorstehenden Ansprüche, wobei die Verzögerungsmanipulation an einer von der Hinterachse (HA) und der Vorderachse (VA) über eine Bremskraft einer ABS-Architektur (ABS2a, ABS2b) und die andere der Hinterachse (HA) und der Vorderachse (VA) über eine Bremskraft eines Achsmodulators (5) geregelt wird, und wobei von der zentralen Steuereinheit (1) bevorzugt nur der Bremskreis (BK1; BK2) der Achse (HA; VA) aktiviert wird, deren Bremskraft über den Achsmodulator (5) geregelt wird.

4. Verfahren nach einem der vorstehenden Ansprüche, wobei die Achse (HA; VA) mit der feineren Abstufung ($\Delta p$) bei der Druckänderung von der Steuereinheit (1) aktiviert wird, wenn die Verzögerungsanforderung (a) in einem Bereich größer 0 liegt, und bei einer vorgegebenen oder vorgebbaren höheren Verzögerungsanforderung (a) von der Steuereinheit (1) automatisch zusätzlich der Bremskreis (BK1; BK2) für die bisher nicht gebremste Achse (HA; VA) aktiviert wird.

5. Verfahren nach Anspruch 4, wobei die Zuschaltung des zusätzlichen Bremskreise (BK1, BK2) in Abhängigkeit von wenigstens einem von Verzögerungsschwellenwert ($a_1$) und Druckschwellenwert ($p_1$) und Differenzschlupfschwellenwert ($s_1$) erfolgt.

6. Verfahren nach Anspruch 4 oder 5, wobei ein in dem zusätzlich aktivierten Bremskreis (BK1; BK2) auftretender Druckeinsprung durch einen Druckabbau in dem Bremskreis (BK1; BK2) mit der feineren Abstufung kompensiert wird.

7. Verfahren nach einem der Ansprüche 3-6, wobei die Verzögerungsmanipulation durch eine Bremskraft an der Hinterachse (HA) durch den Achsmodulator (5) bewirkt wird.

8. Bremssystem (206) für ein Fahrzeug (200), vorzugsweise Nutzfahrzeug (202), mit

einer zentralen Steuereinheit (1),
einem Betätigungselement (4) für das Bremssystem (206) mit einem bevorzugt digitalen Bremsventil (FBV),
einem ersten Bremskreis (BK1) für eine Hinterachse (HA) und
einem zweiten Bremskreis (BK2) für eine Vorderachse (VA),

**dadurch gekennzeichnet, dass**
die zentrale elektronische Steuereinheit (1) in Abhängigkeit von einer Fahrgeschwindigkeit des Fahrzeugs (200) und/oder einer Verzögerungsanforderung (a) durch die elektronische Anforderung einer Verzögerung (XBR) allein den Bremskreis (BK1; BK2) aus erstem oder zweitem Bremskreis (BK1; BK2) aktiviert und regelt, der die feinsten Abstufungen bei einer Druckänderung ($\Delta p$) für eine im Wesentlichen kontinuierliche, ruckfreie Verzögerungsmanipulation (a) hat.

9. Bremssystem (206) nach Anspruch 8, wobei der erste Bremskreis (BK1) oder der zweite Bremskreis (BK2) eine ABS-Architektur (ABS2a, ABS2b) und der andere Bremskreis, insbesondere zweite oder erste Bremskreis (BK2, BK1), einen Achsmodulator (5) umfasst, und wobei die Steuereinheit (1) bevorzugt nur den Bremskreis (BK1, BK2) der Achse (HA; VA), deren Verzögerung über eine Bremskraft des Achsmodulators (5) regelbar ist, zuschaltet.

10. Bremssystem (206) nach einem der Ansprüche 8 oder 9, wobei eine maximal zulässige Verzögerungsanforderung (a), bei der nur die eine Achse (HA; VA) mit der feinsten Druckabstufung ($\Delta p$) aktiviert ist, im Bereich zwischen 0 m/sek$^2$ und 2 m/sek$^2$ liegt, und wobei bevorzugt bei einem Überschreiten der maximal zulässigen Verzögerungsanforderung (a) die elektronische Steuereinheit (1) automatisch zusätzlich den Bremskreis (BK1; BK2) mit der ABS-Architektur (ABS2a, ABS2b) aktiviert.

11. Bremssystem nach einem der Ansprüche 8 - 10, wobei die elektronische Steuerung (1) bei jeder Verzögerungsanforderung (a) den ersten Bremskreis (BK1) und den zweiten Bremskreis (BK2) aktiviert, wenn die Fahrgeschwindigkeit des Fahrzeugs (200) über einem vorgegebenen Geschwindigkeitsschwellwert liegt.

12. Bremssystem (206) nach einem der zwei vorhergehenden Ansprüche, wobei die Steuerung (1) einen Druckeinsprung im Bremskreis (BK1, BK2) mit der ABS-Architektur (ABS2a, ABS2b) durch eine Druckänderung ($\Delta p$) in dem Bremskreis (BK1, BK2) mit dem Achsmodulator (5) kompensiert.

13. Fahrzeug (200), insbesondere Nutzfahrzeug (202), mit einem Bremssystem (206) nach einem der Ansprüche 8 bis 12 geeignet zur Durchführung eines Verfahrens nach einem der Ansprüche 1 bis 7.

## Claims

1. Method for deceleration control of a vehicle (200), in particular of a commercial vehicle (202),

   the vehicle (200) comprising a central control unit (1), a first brake circuit (BK1) for a rear axle (HA), and a second brake circuit (BK2) for a front axle (VA),

   **characterized in that,** in the event of an electronically requested deceleration request (a) below a predetermined deceleration threshold value ($a_1$), solely the brake circuit (BK1, BK2) for the axle from the rear axle (HA) or front axle (VA) is activated by the central control unit (1) and remains activated as long as the predetermined deceleration threshold ($a_1$) is not exceeded by the deceleration request (a), which threshold allows the finest gradation ($\Delta p$) during the pressure change for substantially continuous, jerk-free deceleration manipulation.

2. Method according to claim 1, wherein the other axle from the rear axle (HA) and front axle (VA) remains pressure-free, the brake circuit (BK1, BK2) of which is not activated during the deceleration request (a) below the deceleration threshold value ($a_1$).

3. Method according to any of the preceding claims, wherein the deceleration manipulation at one of the rear axle (HA) and the front axle (VA) is controlled via a braking force of an ABS architecture (ABS2a, ABS2b) and the other of the rear axle (HA) and the front axle (VA) is controlled via a braking force of an axle modulator (5), and wherein the central control unit (1) preferably activates only the brake circuit (BK1; BK2) of the axle (HA; VA) of which the braking force is controlled via the axle modulator (5).

4. Method according to any of the preceding claims, wherein the axle (HA; VA) having the finer gradation ($\Delta p$) during the pressure change is activated by the control unit (1) when the deceleration request (a) is in a range greater than 0, and in the case of a predetermined or predeterminable higher deceleration request (a), the control unit (1) automatically additionally activates the brake circuit (BK1; BK2) for the previously unbraked axle (HA; VA).

5. Method according to claim 4, wherein the additional brake circuit (BK1, BK2) is activated depending on at least one of deceleration threshold ($a_1$) and pressure threshold ($p_1$) and differential slip threshold ($s_1$).

6. Method according to claim 4 or 5, wherein a pressure jump occurring in the additionally activated brake circuit (BK1; BK2) is compensated for by a pressure reduction in the brake circuit (BK1; BK2) having the finer gradation.

7. Method according to any of claims 3-6, wherein the deceleration manipulation is brought about by a braking force at the rear axle (HA) by the axle modulator (5).

8. Brake system (206) for a vehicle (200), preferably a commercial vehicle (202), comprising

   a central control unit (1),
   an actuating element (4) for the brake system (206) having a preferably digital brake valve (FBV),
   a first brake circuit (BK1) for a rear axle (HA), and
   a second brake circuit (BK2) for a front axle (VA),
   **characterized in that,** depending on a driving speed of the vehicle (200) and/or a deceleration request (a) owing to the electronic request for a deceleration (XBR), the central electronic control unit (1) activates and controls solely the brake circuit (BK1; BK2) from the first or second brake circuit (BK1; BK2) which has the finest gradations in the event of a pressure change ($\Delta p$) for substantially continuous, jerk-free deceleration manipulation (a).

9. Brake system (206) according to claim 8, wherein the first brake circuit (BK1) or the second brake circuit (BK2) comprises an ABS architecture (ABS2a, ABS2b) and the other brake circuit, in particular the second or first brake circuit (BK2, BK1), comprises an axle modulator (5), and wherein the control unit (1) preferably activates only the brake circuit (BK1, BK2) of the axle (HA; VA) of which the deceleration can be controlled via a braking force of the axle modulator (5).

10. Brake system (206) according to any of claims 8 or 9, wherein a maximum permissible deceleration request (a), in which only the axle (HA; VA) having the finest pressure gradation ($\Delta p$) is activated, is in the range between 0 m/sec$^2$ and 2 m/sec$^2$, and wherein, preferably when the maximum permissible deceleration request (a) is exceeded, the electronic control unit (1) automatically additionally activates the brake circuit (BK1; BK2) having the ABS architecture (ABS2a, ABS2b).

11. Brake system according to any of claims 8-10, wherein, during each deceleration request (a), the electronic controller (1) activates the first brake circuit (BK1) and the second brake circuit (BK2) when the driving speed of the vehicle (200) is above a predetermined speed threshold.

12. Brake system (206) according to any of the two preceding claims, wherein the controller (1) compensates for a pressure jump in the brake circuit (BK1, BK2) having the ABS architecture (ABS2a, ABS2b) by means of a pressure change (Δp) in the brake circuit (BK1, BK2) having the axle modulator (5).

**13.** Vehicle (200), in particular a commercial vehicle (202), comprising a brake system (206) according to any of claims 8 to 12 suitable for carrying out a method according to any of claims 1 to 7.

**Revendications**

**1.** Procédé permettant la régulation de la décélération d'un véhicule (200), en particulier d'un véhicule utilitaire (202),

dans lequel le véhicule (200) comprend une unité de commande (1) centrale, un premier circuit de freinage (BK1) pour un essieu arrière (HA) et un second circuit de freinage (BK2) pour un essieu avant (VA),
**caractérisé en ce que** seulement l'un des circuits de freinage (BK1, BK2) pour l'essieu parmi l'essieu arrière (HA) ou l'essieu avant (VA) est activé par l'unité de commande (1) centrale lors d'une demande de décélération (a) demandée électroniquement en dessous d'une valeur seuil de décélération ($a_1$) prédéfinie et reste activé tant que la valeur seuil de décélération ($a_1$) prédéfinie n'est pas dépassée par la demande de décélération (a), laquelle valeur seuil de décélération permet la gradation (Δp) la plus fine lors de la variation de pression pour une manipulation de la décélération sensiblement continue et sans à-coups.

**2.** Procédé selon la revendication 1, dans lequel l'autre essieu parmi l'essieu arrière (HA) et l'essieu avant (VA) reste sans pression, dont le circuit de freinage (BK1, BK2) n'est pas enclenché lors de la demande de décélération (a) en dessous de la valeur seuil de décélération ($a_1$).

**3.** Procédé selon l'une des revendications précédentes, dans lequel la manipulation de la décélération est régulée, sur un essieu parmi l'essieu arrière (HA) et l'essieu avant (VA), par l'intermédiaire d'une force de freinage d'une architecture ABS (ABS2a, ABS2b) et, sur l'autre essieu parmi l'essieu arrière (HA) et l'essieu avant (VA), par l'intermédiaire d'une force de freinage d'un modulateur d'essieu (5), et dans lequel de préférence uniquement le circuit de freinage (BK1 ; BK2) de l'essieu (HA ; VA) dont la force de freinage est régulée par l'intermédiaire du modulateur d'essieu (5) est activé par l'unité de commande (1) centrale.

**4.** Procédé selon l'une des revendications précédentes, dans lequel l'essieu (HA ; VA) comportant la gradation (Δp) plus fine est activé par l'unité de commande (1) lors de la variation de pression lorsque la demande de décélération (a) se situe dans une plage supérieure à 0, et, lors d'une demande de décélération (a) supérieure prédéfinie ou pouvant être prédéfinie, le circuit de freinage (BK1 ; BK2) pour l'essieu (HA ; VA) non freiné jusqu'à présent est automatiquement en outre activé par l'unité de commande (1).

**5.** Procédé selon la revendication 4, dans lequel l'enclenchement du circuit de freinage (BK1, BK2) supplémentaire est effectué en fonction d'au moins une valeur parmi une valeur seuil de décélération ($a_1$) et une valeur seuil de pression ($p_1$) et une valeur seuil de patinage différentiel ($s_1$).

**6.** Procédé selon la revendication 4 ou 5, dans lequel une réduction de pression survenant dans le circuit de freinage (BK1 ; BK2) en outre activé est compensée par une diminution de pression dans le circuit de freinage (BK1 ; BK2) comportant la gradation plus fine.

**7.** Procédé selon l'une des revendications 3 à 6, dans lequel la manipulation de la décélération est provoquée par une force de freinage sur l'essieu arrière (HA) par le modulateur d'essieu (5).

**8.** Système de freinage (206) pour un véhicule (200), de préférence un véhicule utilitaire (202), comportant

une unité de commande (1) centrale,
un élément d'actionnement (4) pour le système de freinage (206) comportant une soupape de freinage (FBV) de préférence numérique,
un premier circuit de freinage (BK1) pour un essieu arrière (HA) et
un second circuit de freinage (BK2) pour un essieu avant (VA),
**caractérisé en ce que** l'unité de commande (1) centrale électronique active et régule, en fonction d'une vitesse de déplacement du véhicule (200) et/ou d'une demande de décélération (a), par la demande électronique d'une décélération (XBR), seulement le circuit de freinage (BK1 ; BK2) parmi le premier ou le second circuit de freinage (BK1 ; BK2) qui possède les gradations les plus fines lors d'une variation de pression (Δp) pour une manipulation de la décélération (a) sensiblement continue et sans à-coups.

**9.** Système de freinage (206) selon la revendication 8, dans lequel le premier circuit de freinage (BK1) ou le second circuit de freinage (BK2) comprend une architecture ABS (ABS2a, ABS2b) et l'autre circuit de freinage, en particulier le second ou le premier circuit de freinage (BK2, BK1), comprend un modulateur d'essieu (5), et dans lequel l'unité de commande (1) enclenche de préférence uniquement le circuit de freinage (BK1, BK2) de l'essieu (HA ; VA) dont la décélération peut être régulée par l'intermédiaire d'une force de freinage du modulateur d'essieu (5).

10. Système de freinage (206) selon l'une des revendications 8 ou 9, dans lequel une demande de décélération (a) maximale admissible, lors de laquelle seul l'essieu (HA ; VA) comportant la gradation de pression ($\Delta$p) la plus fine est activé, se situe dans la plage comprise entre 0 m/s$^2$ et 2 m/s$^2$, et dans lequel de préférence, lorsque la demande de décélération (a) maximale admissible est dépassée, l'unité de commande (1) électronique active automatiquement en outre le circuit de freinage (BK1 ; BK2) comportant l'architecture ABS (ABS2a, ABS2b).

11. Système de freinage selon l'une des revendications 8 à 10, dans lequel le dispositif de commande (1) électronique active le premier circuit de freinage (BK1) et le second circuit de freinage (BK2) lors de chaque demande de décélération (a) lorsque la vitesse de déplacement du véhicule (200) se trouve au-dessus d'une valeur seuil de vitesse prédéfinie.

12. Système de freinage (206) selon l'une des deux revendications précédentes, dans lequel le dispositif de commande (1) compense une réduction de pression dans le circuit de freinage (BK1, BK2) comportant l'architecture ABS (ABS2a, ABS2b) par une variation de pression ($\Delta$p) dans le circuit de freinage (BK1, BK2) comportant le modulateur d'essieu (5).

13. Véhicule (200), en particulier véhicule utilitaire (202), comportant un système de freinage (206) selon l'une des revendications 8 à 12 adapté pour la mise en oeuvre d'un procédé selon l'une des revendications 1 à 7.

**FIG. 1**

EP 4 069 558 B1

P

(p1)

A

Δp

t

**FIG. 2**

P

p1

B

Δp

B1

B2

t

**FIG. 3**

**FIG. 4**

**FIG. 5**

FIG. 6

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4340467 A1
- DE 102017005816 A1